# EUROPEAN PATENT SPECIFICATION

(11) **EP 1 409 853 B1**
(45) Date of publication and mention of the grant of the patent: **19.04.2006**
(21) Application number: 01995378.5
(22) Date of filing: 30.11.2001
(51) Int. Cl.: F01L 9/02

(54) **HYDRAULIC VALVE ACTUATION SYSTEMS AND METHODS**
VORICHTUNGEN UND VERFAHREN ZUR HYDRAULISCHEN BETÄTIGUNG VON EINEM VENTIL
SYSTEMES ET PROCEDES D'ACTIONNEMENT DE SOUPAPE HYDRAULIQUE

(30) Priority: 04.12.2000 US 729487
(43) Date of publication of application: 21.04.2004
(73) Proprietor: Sturman Industries, Inc., Woodland Park, CO 80863 (US)
(72) Inventor: TURNER, Christopher, Wayne, Fort Collins, CO 80528 (US); RAIMAO, Miguel, Angelo, Manitou Springs, CO 80829 (US); BABBITT, Guy, Robert, Colorado Springs, Colorado 80905 (US)
(74) Representative: Texier, Christian
(86) International application number: PCT/US2001/046686
(87) International publication number: WO 2002/046582

(56) References cited:
- EP-A- 0 550 925
- DE-B- 1 292 493
- US-A- 5 193 584
- US-A- 5 640 987
- US-A- 5 881 689

## Description

### BACKGROUND OF THE INVENTION

### 1. Field of the Invention

The present invention relates to the field of hydraulic valve actuation for internal combustion engines.

### 2. Prior Art

At the present time, piston-type internal combustion engines of interest to the present invention are currently widely used in automobiles, trucks, buses and various other mobile and stationary power systems. Such engines include the common gasoline and diesel engines, as well as similar engines operating from different fuels such as liquid propane. These engines commonly utilize intake and exhaust valves that are spring loaded to the closed position and which are directly or indirectly opened at appropriate times by a camshaft driven from the engine crankshaft. In a two-cycle engine such as a two-cycle diesel engine, the camshaft will rotate in synchronism with the engine crankshaft, though in a four-cycle engine, the camshaft is driven through a two-to-one reduction drive system (gear or chain or belt, etc.) to rotate at one-half the engine crankshaft speed.

Camshaft actuation of engine valves historically has had a number of advantages, resulting in its relatively universal use in such engines for many decades. These advantages include high reliability, particularly given the current level of development of such cam actuated valve systems. Cam actuation is also relatively cost effective, again given the state of development and quantities in which it is produced. Cam actuation also has the advantage of allowing shaping the cam to provide a smooth curve defining valve position versus camshaft angle. This results in a rather low velocity takeoff and initial valve opening, as well as a rather low velocity valve final closing at low engine speeds, resulting in minimum noise being generated. It also results in faster valve opening and valve closing at higher engine speeds as required to maintain the same valve timing throughout the engine speed operating range.

Cam actuated valve systems also have certain limitations which are becoming of increasing concern. In particular, optimal valve timing is not fixed throughout the engine operating range. For instance, valve timing for maximum power at one engine speed will not be the same as valve timing for maximum power at another engine speed. Accordingly, the classic cam operated valve systems utilize a compromise valve timing, providing reasonable performance over a reasonable range of engine operating conditions while being less than optimal for most, if not at all, these conditions. Further, valve timing for maximum power at any engine speed may not be optimal from an engine emissions standpoint. Optimum valve timing at any given engine speed may need to be dependent on engine loading, and perhaps other parameters, such as air temperature, air pressure, engine temperature, etc.

Recently, mechanisms have been introduced to attempt to make up for some of the limitations in the fixed timing cam operated valve systems. These mechanisms include mechanisms for varying valve timing (but not valve opening duration in terms of camshaft angle) with engine speed, as well as mechanisms for also increasing the valve open duration. However, such mechanisms tend to be complicated, open the valve a fixed distance under all engine operating speeds and are limited in the number and range of variables for which valve operation may begin to be optimized.

Recently various hydraulic systems for valve actuation have been proposed. These systems offer the potential of more flexible control of valve actuation parameters over the range of the various engine operating parameters. The present invention is an improvement on these systems.

US-A 5 881 689 shows an apparatus according to the preamble of claim 1. DE-A 12 92 493 shows a proportional valve not having a non linear flow area.

### BRIEF SUMMARY OF THE INVENTION

The invention relates to an apparatus adapted for operating an engine valve as defined in claim 1. The apparatus utilizes a proportional valve to regulate the flow of a working fluid to and from a hydraulic actuator controlling the engine valve position. The position of the proportional valve is controlled by high speed valves to control various engine valve parameters, including engine valve takeoff and landing velocities. Returning all valves to a known starting position between engine valve events avoids accumulation of errors in proportional valve positioning. Embodiments using spool valves for the high speed valves and the proportional valve, and spring return and hydraulic return for the engine valve, are disclosed.

To provide enhanced control over the engine valve operation, a specially shaped spool in the proportional valve may be used to shape the flow areas versus spool position. This allows more gradual restricting of the flow areas versus spool movement over selected portions of the possible spool positions, diminishing the effect of small errors in spool position in such regions without inhibiting the maximum flow areas when the spool is at its maximum positions.

Various further alternate embodiments are disclosed.

### BRIEF DESCRIPTION OF THE DRAWINGS

Figure 1 is a block diagram of an exemplary configuration of a system in accordance with the present invention.
Figure 2 is a diagram illustrating the general structure and function of the three-way proportional spool valve 24 of Figure 1.
Figure 3 is a perspective view of the spool 38 of the proportional valve of Figure 2.
Figure 4 is an expanded view of an edge of the center land of the spool 38 of Figure 3.
Figures 5 and 6 are graphical representations of the flow area versus spool position provided by the proportional valve 24 between the high pressure rail and the chamber 26 of the valve actuator, and between the chamber 26 and the vent 37, respectively.
Figure 7 is a cross sectional view of an engine valve actuator consisting of two concentric pistons that may be used with the present invention.
Figure 8 is a diagram of an embodiment of the present invention that controls a hydraulically returned engine valve using a closed center 3-way proportional valve.
Figure 9 is a diagram of an embodiment of the present invention that controls a hydraulically returned engine valve using a closed center 4-way proportional valve.

### DETAILED DESCRIPTION OF THE PREFERRED EMBODIMENT

The present invention is a hydraulic valve operating system for operating one or more intake valves or one or more exhaust valves in a piston-type internal combustion engine, which provides full flexibility in valve timing, valve duration, extent of opening, and valve opening and closing velocity. Operation over the desired range of these and other parameters may be controlled, and more importantly optimized, for all engine operating conditions. Such optimization may also include incrementally adjusting the valve operation based on the valve operation during a previous valve operating cycle. This is achieved by controlling the position of a proportional valve by the use of pilot valves to control the operating parameters of an intake or exhaust valve. In that regard, a reference herein and in the claims to an "intake valve" or an "exhaust valve," unless otherwise made clear by the context in which the phrase is used, shall mean one or more intake valves for a cylinder of an internal combustion engine, or one or more exhaust valves of a cylinder of an internal combustion engine. Exemplary embodiments of this system, sometimes referred to herein as a "two-stage" system, are hereafter described in detail.

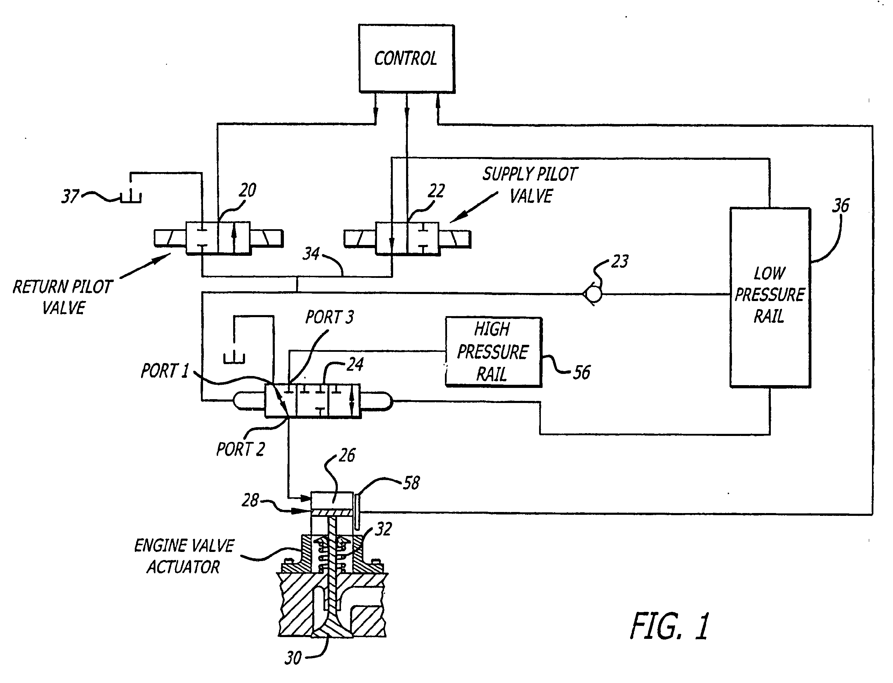

First referring to Figure 1, a block diagram of an exemplary configuration of a system in accordance with the present invention may be seen. The system illustrated in Figure 1 may be used to actuate an intake or an exhaust valve. This 2-stage system consists of 2 miniature 2-way digital latching spool valves 20 and 22 coupled to control the position of a 3-way proportional spool valve 24. The proportional spool valve, in turn, controls the flow area into, and out of, a control volume 26. This control volume acts on an actuator 28 to regulate the position of the engine valve 30. In this embodiment, a spring return 32 is utilized for valve closing, though embodiments with hydraulic valve closing may also be used, as shall be subsequently described.

The 2 miniature 2-way digital latching spool valves 20 and 22 (referred to herein as pilot valves) may preferably be identical valves, preferably in accordance with the 2 way valves disclosed in U.S. Patent No. 5,640,987 entitled Digital Two, Three, and Four Way Solenoid Control Valves, issued June 24, 1997, the disclosure of which is incorporated herein by reference. Such valves are double solenoid, high speed, magnetically latching spool valves, that as used in the present invention, are operable between two positions. The first position couples a first port to a second port for fluid communication between the two ports, and the second position blocks fluid communication between the first and second ports. While other types of valves could be used, such as poppet valves, valves generally of the type disclosed in the above referenced patent are preferred because of their very high speed for good control, and low energy consumption because of such capabilities as their magnetic latching, and the ability to sense completion of actuation, if used, to minimize heating above the already relatively warm environment in which they operate. (See U.S. Patent Nos. 5,720,261 and 5,954,030.)

In the embodiment of the present invention of Figure 1, valve 20 allows fluid flow from fluid line 34 to a drain line or reservoir 37 (at a relatively low pressure, such as atmospheric pressure) when in its first position, and blocks fluid flow from fluid line 34 to the drain 37 when in its second position. Valve 22 allows fluid flow from a low pressure rail 36 to the fluid line 34 when in its first position, and blocks fluid flow from the low pressure rail 36 to the fluid line 34 when in its second position. Check valve 23 is optional, and is normally closed, as the differential pressure on the check valve normally will not be in a direction to open the valve. Its presence however, will help damp transient pressure fluctuations and recover energy in the pressure fluctuations.

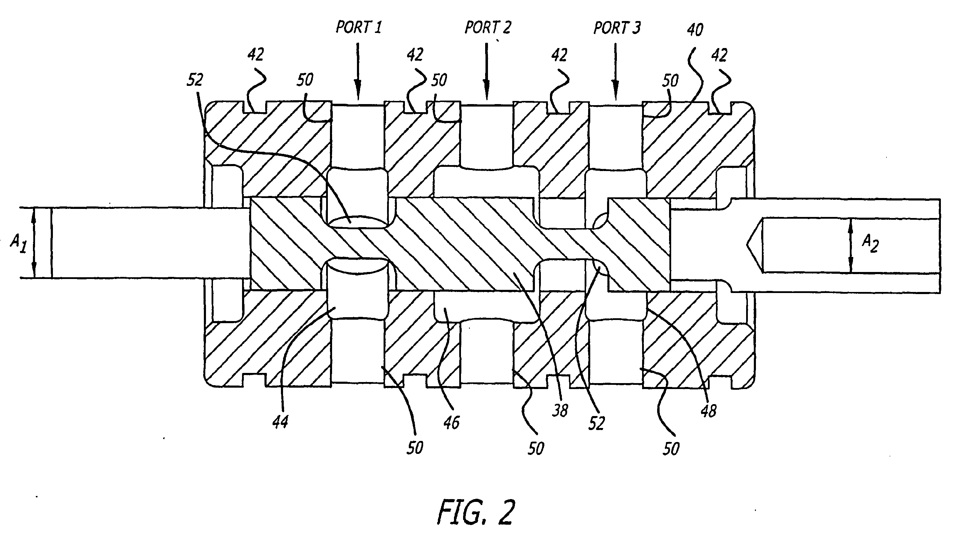

Now referring to Figure 2, a diagram illustrating the general structure and function of the three-way proportional spool valve 24 of Figure 1 may be seen. The proportional spool valve includes a spool 38 within an internal housing 40 which fits within an external housing assembly (not shown) with O-rings in O-ring grooves 42 to separate the regions of ports 1, 2 and 3 from each other and from the ends of the internal housing 40. In that regard, the outer housing assembly, in addition to having the associated fluid connections, also includes internal annual grooves adjacent each of the regions identified as ports 1, 2 and 3 in Figure 2, each to act as a manifold region for the holes through the internal housing 40 for fluid communication with a respective one of the inner regions 44, 46 and 48 in the internal housing 40, respectively. Fluid communication from each of the ports to the associated inner region 44, 46 or 48 is provided in the exemplary embodiment not only by through holes 50, but also by cooperatively disposed orthogonal through holes 52 associated with each of the ports.

As schematically illustrated in Figure 2, the spool 38 is positioned within the internal housing 40 by fluid pressures acting on a piston at the left end of the spool having an effective area A₁ and a piston at the right side of the spool having an effective area of A₂. As specifically illustrated in Figure 2, the spool 38 is shown in its extreme left-most position, referred to herein as its first position, as defined by stops on the travel of either the pistons actuating the spool or stops acting on the spool itself. In this position, the spool 38 is blocking fluid communication between ports 2 and 1 and is allowing fluid communication between ports 3 and 2. Obviously, when the spool is at its extreme-right position, referred to herein as its second position, fluid communication between ports 1 and 2 is blocked and fluid communication between ports 2 and 3 is enabled.

Normally in a spool valve, by way of example in the two miniature, two-way digital latching spool valves 20 and 22 of Figure 1, fluid communication between two adjacent ports will be blocked when the spool is in one position and during the initial motion of the spool toward the other position. However, once the relief on the spool associated with the land in the housing separating the regions coupled to the two adjacent ports starts to bridge the land, a flow area between the regions coupled to the two ports is established, that flow area increasing linearly with further motion of the spool. Because that flow area is a peripheral flow area of the full diameter of the spool, once opening starts, a relatively large flow area between the two ports will be opened with only a relatively small further motion of the spool.

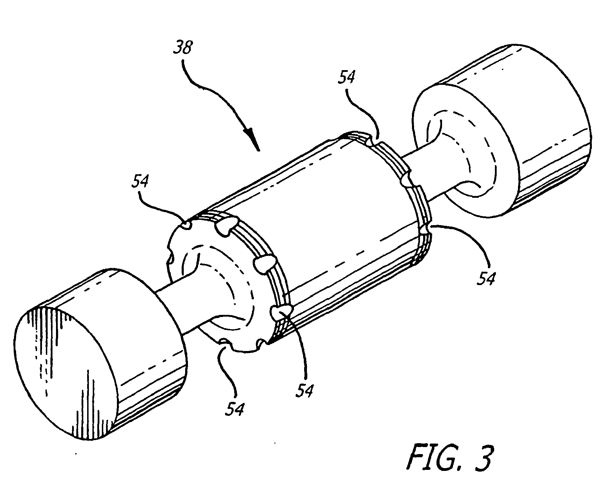

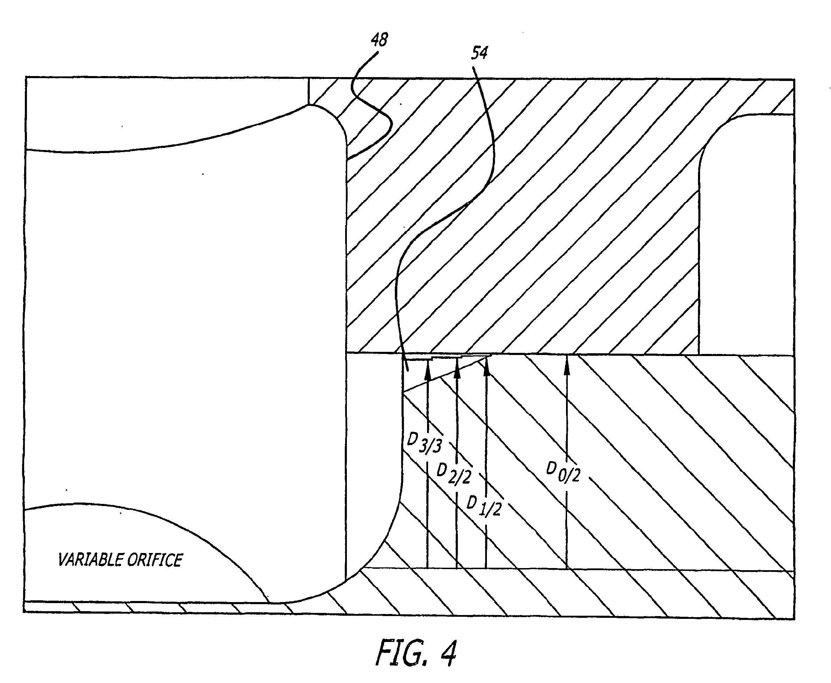

However, in the three-way proportional spool valve 24 (Figure 1), some of the details of which are illustrated in Figure 2, this change in flow area versus spool position is purposely modified to reshape the flow area versus spool position. In the exemplary embodiment, this is accomplished in the manner illustrated in Figures 3 and 4. In that regard, Figure 3 is a perspective view of the spool 38 and Figure 4 is an expanded view of an edge of the center land of the spool 38. As may be seen in Figure 3, the center land on the spool has a plurality of kerfs 54 equally spaced around each end of the center land, which kerfs begin to open a controlled flow area with spool position prior to the edge of the land on the spool reaching the edge of the land on the internal housing, the normal position for a spool valve flow area starting to be established.

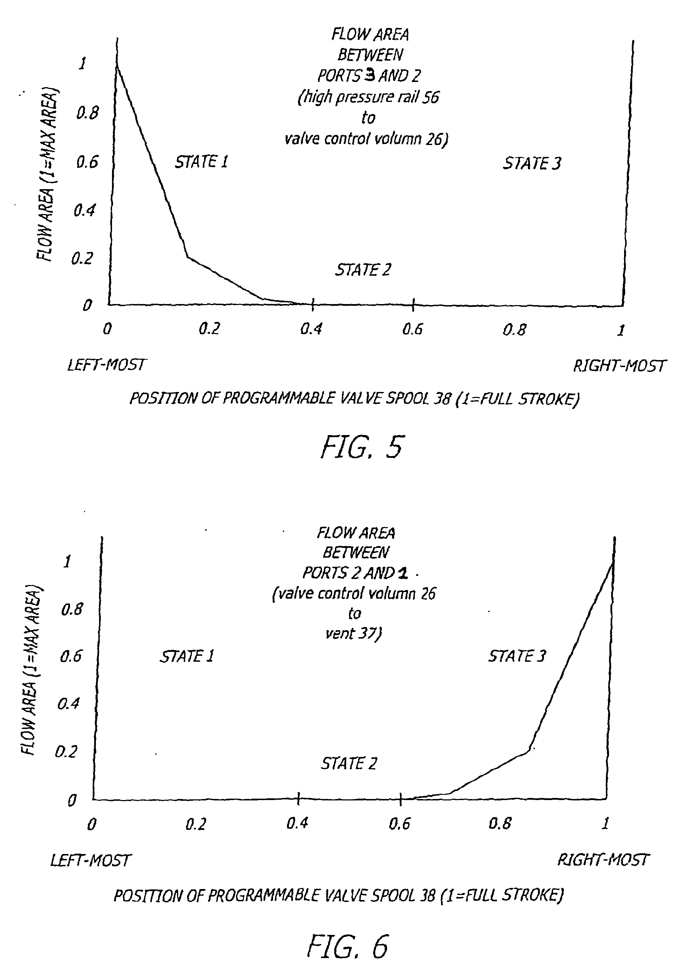

In addition, as may be seen in Figure 4, small steps are ground in the center land of the spool of the three-way proportional spool valve of the exemplary embodiment. Thus, while the spool has an outer diameter D₀ having a close sliding fit within the inner diameter of the internal housing, each end of the center land of the exemplary spool has additional diameters D₁, D₂ and D₃, where D₃ is less than D₂, D₂ is less than D₁ and D₁ is less than D₀. This provides a non-linear variation in flow area versus spool position during the opening and closing of the fluid communication between adjacent ports, as illustrated in Figures 5 and 6. These figures illustrate the flow area between ports 3 and 2, and ports 2 and 1, respectively, versus the position of the spool in the three-way proportional spool valve. As may be seen in Figure 5, when the spool is at the left-most position, the flow area between ports 3 and 2 is a maximum, initially decreasing at a relatively high rate for the initial motion of the spool to the right, then decreasing in rate for another part of the motion, then decreasing at a further reduced rate to a substantially zero flow area for the rest of the spool motion, essentially blocking communication between ports 1 and 2 when approximately 40% of the spool motion has been achieved. In comparison, Figure 6 shows the flow area between ports 2 and 1, which is a mirror image of Figure 5.

It will be noted from Figures 5 and 6 that in the exemplary embodiment of the present invention, the reduction in flow area on the initial valve closing motion of the spool occurs at a high rate with respect to spool position, decreasing in change in flow rate with an increasing position of the spool until the flow area goes to substantially zero when less than half of the spool motion has been achieved, thereby substantially altering the flow area versus spool position characteristic of a conventional spool valve. Also, because the flow area goes to substantially zero before one-half of the maximum spool travel has been achieved, fluid communication between both ports 1 and 2, and ports 2 and 3, is disabled or blocked when the spool is approximately centered within its travel range. For the specific exemplary embodiment illustrated, the substantial blockage between both ports 1 and 2, and ports 2 and 3, occurs whenever the spool's position is anywhere between approximately 40% of its travel and 60% of its travel. Obviously other shaping of the flow areas, or no shaping may be used if desired, though preferably some shaping will be used to diminish the effect of small errors in spool position in the restricted regions without inhibiting the maximum flow areas when the spool is at its maximum positions.

Referring again to Figure 1, it may be seen that fluid in the low pressure rail 36, which may have a pressure, by way of example, of 20 to 50 bar, is coupled to the right side of the three-way proportional spool valve 24 to act on the area A₂ (Figure 2) of a piston encouraging the spool to its left-most position.

Assuming spool valve 22 is open and spool valve 20 is closed, pressure in the low pressure rail 36 is communicated to line 34, and thus acts on area A₁ of the piston actuating the spool of the proportional spool valve (Figures 1 and 2). Because the area A₁ is larger than the area A₂, the spool of the proportional spool valve is forced to its right-most position, coupling port 1 and port 2 to couple chamber 26 to vent, allowing the valve return spring 32 to force the valve 30 to the closed position. Preferably area A₁ is approximately twice area A₂ so that A₁ - A₂ A₂.

If the two-way valve 22 is closed and the two-way valve 20 is open, line 34 will be vented to the drain 37, so that the pressure acting on piston area A₁ (Figure 2) of the three-way proportional spool valve will be substantially zero. The pressure acting on area A₂ of the spool valve, however, will be equal to the pressure of the low pressure rail 36, thereby creating an unbalanced force on the spool to force the spool to its left-most position. In this position, port 2 is in fluid communication with port 3, communicating the pressure in the high pressure rail 56 to control volume 26 to force the valve 30 open.

If, by way of example, valve 30 is half open and spool valves 20 and 22 are both closed, then port 2 of the proportional spool valve will be isolated from both ports 1 and 3, so that the fluid in the control volume 26 is trapped, maintaining the valve 30 at its present position. Finally, since the two-way spool valves 20 and 22 are very high speed valves, they may be controlled in such as manner as to rapidly controllably place the spool of the proportional spool valve at any desired location within the extremes of its travel, and thus variably control the flow rate of fluid into or out of the control volume 26. This, in turn, allows full control of the operating parameters of the valve 30, such as the extent of opening, the timing and duration of opening, the velocity profile of the opening and closing of the valve (which profiles can be different from each other and/or vary with engine operating conditions), and the final valve closing velocity with engine rpm. This allows a relatively low velocity valve closing at low engine rpm for low noise operation, while still allowing the closing velocity to be increased with engine rpm, as necessary for higher engine operating speeds.

The fluid used in the exemplary embodiment in the low pressure rail, the high pressure rail and passed to drain is engine operating oil, though other fluids may be used if desired. Since the flow rates in the control system for valve 30 will vary with various parameters, such as oil viscosity, and thus oil temperature, and the pressure of the low pressure rail and the high pressure rail, operation of the valve control system of Figure 1 must reasonably compensate for such variations. As a first order approximation, these variations may be reasonably modeled so that the control system as shown in Figure 1 can reasonably vary operating durations of valves 20 and 22 to at least approximate the desired profile of the proportional valve spool position with engine crankshaft angle, given the existing engine operating parameters (speed, engine load, fuel temperature, air temperature, engine oil temperature, atmospheric pressure, etc.).

In the exemplary embodiment, a small Hall effect sensor 58 is positioned adjacent actuator 28 for the valve 30 so as to provide a feedback signal to the controller. Thus valve motion during a valve operating cycle may be monitored and used to control the operation of the valves 20 and 22 for that valve operating cycle, and/or to make corrections in the next valve operating cycle to more accurately achieve optimum valve operation for that valve operating cycle. In that regard, more optimum operation may be determined in any of various ways, including better compliance to a predetermined valve position profile versus engine crank angle as predetermined for the then existing engine operating conditions and ambient conditions, or as determined by the effect of incremental changes on one or more engine performance characteristics for the change in valve operation just made, or a combination of both.

In the event two (or more) valves are being actuated in unison by a single proportional valve 24, a sensor such as a position sensor (Hall effect sensor or other position sensor) may be used on only one of the valves, or on both valves, the sum of the signals providing a better average indication of the position profile of the two valves and the difference in the signals providing fault detection, such as a sticky valve. While a position sensor(s) is preferred, other types of sensors could be used, such as a velocity sensor, as the integration times to convert to position are short. In that regard, at the end of each valve operating cycle, the control valve 22 is actuated to couple line 34 to the low pressure rail 36 and control valve 20 is actuated to decouple line 34 from the drain 37 to bring the spool 38 to the stop at the position shown schematically in Figure 1. This provides predetermined spool and pilot valve starting points for each valve operating cycle so that errors in the spool valve position do not accumulate, valve operating cycle to valve operating cycle. If desired, a sensor may also be used to sense the position of the proportional spool valve spool 38, though this is not preferred.

Thus the two miniature latching valves 20 and 22 (sometimes-referred to herein as pilot valves) control the position of the proportional valve 24. Specifically, the supply pilot valve 22 allows fluid to flow between a low-pressure rail 32 (approximately 20-50 bar) and a first piston used to move the proportional 3-way valve. The vent pilot valve 20 will allow fluid to flow from the piston to a vent at atmospheric pressure. Using these pilot valves, the position of the proportional valve can be changed quickly and accurately. The position of the proportional valve can be infinitely varied throughout 3 flow states noted in Figures 5 and 6, namely:
State 1: The high pressure fluid from the high pressure rail 56 (approximately 100-240 bar) is allowed to flow from the high pressure rail to a control volume 26 above the engine valve actuation piston.
State 2: The spool 38 of the proportional valve is centered between its hard stops, trapping fluid in the control volume above the engine valve actuation piston and creating a hydraulic lock.
State 3: The fluid in the control volume 26 above the engine valve actuation piston is vented to atmospheric pressure.

As the proportional valve moves from state 2 to state 3, the area through which high-pressure fluid from the high pressure rail 56 can flow into the control volume 26 above the engine valve actuation piston increases nonlinearly. (See Figure 6). Similarly, as the proportional valve moves from state 2 to state 1, the area through which fluid can flow out of the control volume 26 above the engine valve actuation piston to drain 37 increases nonlinearly (See Figure 5). Thus the geometry of the proportional spool valve has been designed with regions of high and low gain. The low gain region provides fine control for take-off and seating velocities, while the high gain region provides the large flow area required to achieve maximum engine valve velocities. This facilitates more accurate control of the engine valve during seating and take-off. These areas need more accuracy so that proper seating velocities and valve overlap are achieved throughout the full range of engine speed and temperature.

To better describe the function of the exemplary hydraulic system, the following description traces the system through a complete engine valve operating cycle, mimicking results from a nodal hydraulics simulation. The specific simulation model used 100°C OW30 synthetic motor oil at an engine speed of 6000 rpm, though simulations at lower engine speeds have also been run.

An exemplary valve event may be described as follows. Initially the supply pilot valve 22 is open and the vent pilot valve 20 is closed (as illustrated in Figure 1). This keeps the proportional valve spool in the venting (right-most) position (State 3, Figures 5 & 6). Specifically, the flow area between engine valve actuation piston control volume 26 and vent 37 is at a maximum (state 3, Figure 6) and the area between engine valve actuation piston control volume and the high-pressure rail is closed (state 3, Figure 5). As a result, the engine valve is forced closed against its seat by the return spring 32.

To initiate valve opening, the supply pilot valve 22 is opened and the vent pilot valve 20 is closed. This allows fluid to flow from the control volume of the proportional spool valve to vent. As a result, the proportional spool begins to move from state 3. The vent pilot valve 20 is left open long enough for the proportional spool to pass through state 2 and into state 1. However, the proportional valve is only allowed to travel until just a small flow area in the low gain region of state 1 is open between the high-pressure rail (Figure 5) and engine valve actuation piston control volume 26. This results in a slow take-off of the engine valve. The speed of this take-off will vary depending on where the proportional valve is stopped. Then the vent pilot valve 20 is opened once again so that the proportional spool moves to a position that opens a larger flow area between the high pressure rail and the engine valve actuation piston's control volume. This results in a rapid opening of the engine valve after the initial slow takeoff.

The engine valve now must stop at the desired lift, in this particular example, 11mm. To do this, the proportional spool will be moved to state 2 in which the control volume above the engine valve is hydraulically locked. This is achieved by closing the vent pilot valve 20 and opening the supply pilot valve 22 for the required amount of time. The engine valve will stay in this position until it is commanded to return. At this point the kinetic energy in the engine valve is fully converted into potential energy of the fluid in the control volume and the engine valve return spring. This trade off between kinetic and potential energy occurs several times while the control volume is hydraulically locked, which can result in a slight oscillation of the engine valve position. To reduce this effect and to recover some of the kinetic energy in the proportional valve spool, a check valve could also be placed between the control volume 26 of the engine valve actuator and the high-pressure rail 56 in order to damp out any high pressure spikes that may occur during operation.

Next, the supply pilot valve 22 will be opened again long enough to move the proportional valve to the high gain region of state 3, and then closed, at least before vent pilot valve 20 is again opened. To reiterate, at this point the flow area between the engine valve control volume 26 and vent 37 is a maximum. Therefore, the engine valve will accelerate very quickly toward its seat via the stored energy in the valve spring.

In order to seat the valve at the desired velocity, the flow area that connects the engine valve control volume 26 and vent 37 must be restricted. This can be achieved by once again opening the vent pilot valve 20 for a short period to reposition the proportional valve to a low gain in state 3. This seating velocity will change depending on where the proportional valve is stopped in this region.

This completes one engine valve cycle. In order to prepare the system for the next event, all components will be repositioned to their initial conditions. The only component that is out of position is the proportional valve. The supply pilot valve 22 is again opened, returning the proportional valve to a position of maximum flow area in state 3. This reestablishes a reference point at the beginning of each valve event, so that errors in proportional valve positioning do not accumulate, one valve cycle to another. In this way, the seating velocities desired at different engine speeds, loads and temperatures can be achieved by changing the position at which the proportional spool dwells. This can be facilitated further by varying the pressure in the low-pressure rail if desired, thus accomplishing finer control of the proportional spool valve.

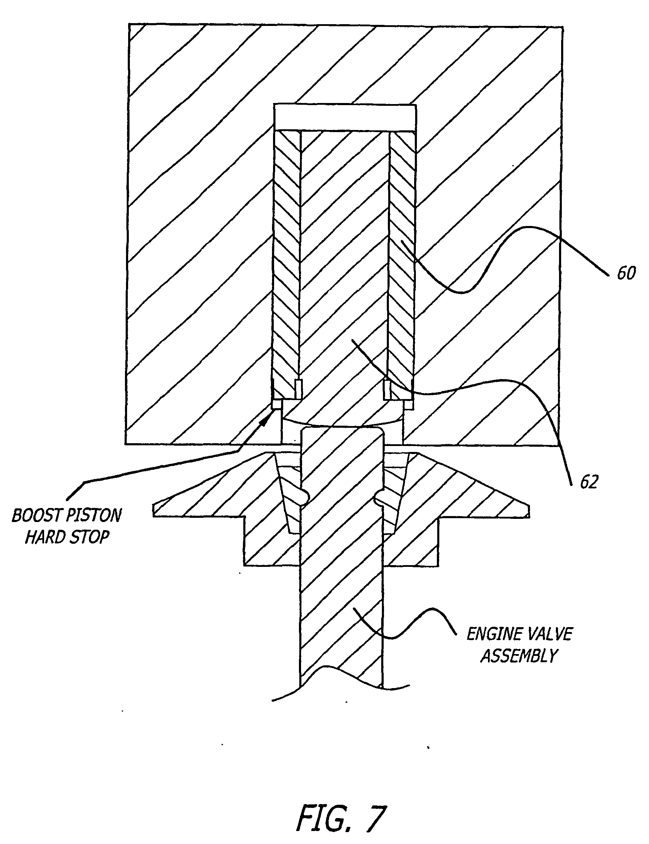

In a simulation of the system described above, an engine valve actuator consisting of two concentric pistons was used, as illustrated in Figure 7. Instead of using one actuator with a relatively large area exposed to pressure to drive the engine valve through its entire stroke, the large piston (boost piston 60) is used only initially to achieve peak velocities before reaching a mechanical stop, while the remainder of the stroke is accomplished using a smaller telescoping piston (drive piston 62). Specifically, when the engine valve, particularly an exhaust valve, initiates lift from its seat, in-cylinder pressure remains substantial. In addition, maximum engine valve acceleration is also required at this time. As a result, a greater force is needed to actuate the engine valve through the beginning of its stroke while a much lower force is required for the remainder of the stroke. The present invention system does not rely on using the two concentric piston design, as it will also function if just one actuator is used. However, the two concentric piston design requires less fluid from the high pressure rail for each valve cycle, and thus requires less energy for valve operation.

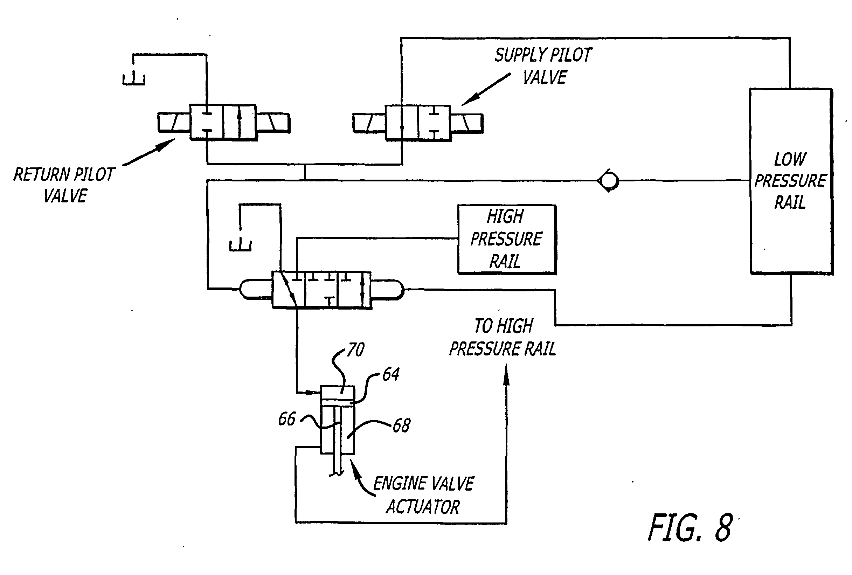

One can also use a hydraulically returned engine valve as opposed to a spring returned valve, as illustrated in Figure 8. In this embodiment, the valve actuator comprises a piston 64 having a cross-sectional area A₁ on a piston rod 66 having a cross-sectional area A₂. Chamber 68 is permanently coupled to the high pressure rail, and chamber 70 is switchable by the proportional valve between the high pressure rail and the vent. Consequently, the maximum valve opening force is equal to the pressure of the high pressure rail times A₂ and the maximum valve closing force is equal to the pressure of the high pressure rail times A₁-A₂. Because of the functional relationship between spring force and stroke, one can achieve essentially the same valve dynamics as a hydraulically returned valve with a smaller diameter actuator.

With a return spring, the spring closing force is at a minimum when one desires a large opening force for maximum acceleration against peak cylinder pressure. With hydraulic return, the closing force of a hydraulically returned engine valve is constant and therefore will be higher than that of a spring when the valve is seated. Therefore, the force characteristic of a mechanical spring is more desirable for returning the engine valves than a single piston return mechanism.

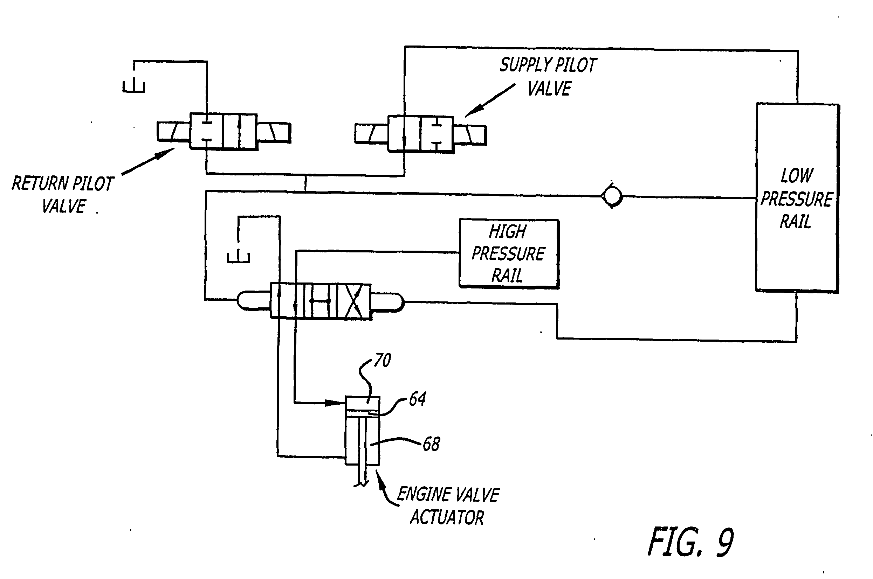

Instead of using a closed center 3-way proportional valve, the hydraulically returned system can also be constructed using a closed center 4-way proportional valve (Figure 9). Like the closed center 3-way proportional valve, its position can also be infinitely varied throughout 3 flow states.
State 1: The high pressure fluid is allowed to flow from the high pressure rail to a control volume 70 above the engine valve actuation piston 64 while the fluid in chamber 68 acting below the engine valve actuation piston 64 is vented to tank.
State 2: The proportional valve is centered between its hard stops, trapping fluid in the control volume 70 above the engine valve actuation piston and in the control volume 68 below the engine valve actuation piston, thus creating a hydraulic lock.
State 3: The fluid in the control volume 70 above the engine valve actuation piston is vented to atmospheric pressure while high pressure fluid is allowed to flow from the high pressure rail to the control volume 68 below the engine valve actuation piston 64.

As the proportional valve moves from state 2 to state 1 the area through which high-pressure fluid can flow into the control volume 70 above the engine valve actuation piston 64 increases nonlinearly (similar to Figures 5 & 6). At the same time the flow area between the fluid below the engine valve actuation piston 64 and tank increases nonlinearly. Similarly, as the proportional valve moves from state 2 to state 3, the area through which fluid can flow out of the control volume 70 above the engine valve actuation piston 64 to tank increases nonlinearly. At the same time the flow area between the fluid below the engine valve actuation piston 64 and the high-pressure rail increases nonlinearly.

In all the systems described, the proportional valve uses hydraulic force to oppose the pressure in its control volume. Alternatively, the proportional valve can also use a spring to supply part or all of the opposing force.

Any of the 3-way proportional valve systems can take advantage of the recovery systems known in the art. The low-pressure rail used for actuating the 3 or 4 way proportional valve can be used for the low-pressure source of the recovery system if that system is implemented.

The present invention has many advantages for both diesel and gasoline engines, as well as similar engines powered with alternate fuels. These advantages include:
Infinitely variable engine valve timing for both opening and closing times.
Infinitely variable engine valve lift from the valves seat to its maximum lift position.
Infinitely variable valve open and/or close time duration.

The proportional 3 or 4 way valve has low gain flow regions for fine control at valve take-off and seating. It also has high gain flow regions for maximum flow allowing increased speed of the engine valve so that airflow into the engine cylinders can be maximized.

The system can allow the engine valve profile to be non-symmetric.

The system is capable of an infinitely varying the slew rate of the engine valve independent of rail pressure.

The system does not require a slow take-off and landing. Specifically, the valve can begin opening with maximum acceleration or seat at maximum velocity if desired.

The system does not need a lash adjustment system, specifically:
the system is unaffected and can compensate for the growth of engine components (specifically valve train components) due to thermal expansion,
the system is unaffected and can compensate for engine valve recession due to wear of the valve seat and the engine valve, and
the system is unaffected and can compensate for tolerance stack up between valve train components resulting from initial assembly and manufacturing tolerances.

The system can compensate for varying working fluid viscosity due to temperature, age, etc.

The system can optimize the amount time at which air is metered into the engine cylinder thus optimizing the combustion event at the full spectrum of engine operating conditions resulting in:
maximum power,
lower emissions,
reduced emissions by controlling fuel/air mixing,
reduced heat rejection by reduction of unnecessary in cylinder air motion, and
high BMEP combustion schemes to improve catalyst light-off, reduce startup emissions.

The system can be operated in such a way that engine braking will result, specifically by shutting off the injector during braking and opening the exhaust valve at the top of the compression stroke to dissipate the compression energy.

The engine cycle can be varied to allow for:
2 stroke operation.
Multiple stroke operation (such as, by way of example 2-stroke to 4-stroke, 4-stroke to 6-stroke or 8-stroke operation, etc.) by eliminating one or more pairs of strokes from the normal engine operating cycle, with the valves being controlled during these pairs of strokes for minimum energy loss and/or other considerations.
The system can allow for internal exhaust gas recirculation (EGR). As a result the EGR valve can be removed.
Variable compression ratio.
Miller cycle operation - Maximum cylinder pressure control with high expansion ratio for maximum thermodynamic efficiency.
Atkinson cycle operation.
Reduced heat rejection by reduction of unnecessary in cylinder air motion.
High BMEP combustion schemes to improve Catalyst light-off, reduce startup emissions.
Improved Cranking and Cold Start.
Reduced white smoke and diesel "fuel" smell during startup/cold temperature idle/high altitude operation
High altitude compensation.
Variable torque curves to better fit duty/drive cycle of vehicle.
Increased torque at low speeds for better driveability, potential vehicle fuel economy improvements.

The system will operate more efficiently with a sequentially apportioned pump.

The low-pressure rail can be replaced with an accumulator that is supplied by the return flow of the engine valve actuator.

Because the engine valve motion can be varied so that air can be throttled at the engine valve, the throttle body can be eliminated.

Operation of the turbo can be optimized at all engine operating conditions.

Cylinder deactivation for improved vehicle fuel economy.

This 2-stage system has the capability of satisfactorily controlling engine valves at very high engine speeds (from idle speeds to 10,000 RPM). In addition, the critical regions of valve take-off and seating can be controlled with accuracy and precision while providing the features of infinitely variable valve timing, duration and lift. The system also has the capability of significantly increasing the amount of air that can be supplied to an engine's cylinders throughout the full range of engine speed by adjusting valve timing and duration to maximize the dynamic effects of flow into and out of the combustion chamber at all engine speeds.

## Claims

1. Apparatus adapted for operating an engine valve (30), comprising:
a hydraulic actuator (28) operable to selectively move the engine valve (30) toward an engine valve open position by the pressure of a fluid acting on the hydraulic actuator (28);
a proportional valve (24) having a valve member (38) moveable between a first position at which the proportional valve (24) is adapted to couple a source of fluid under a first pressure (56) to the hydraulic actuator (28), a second position at which the proportional valve (24) is adapted to couple the hydraulic actuator (28) to a reservoir of fluid under a second pressure (37, the second pressure being less than the first pressure,
electrically controlled valving (20, 22) hydraulically controlling the position of the valve member;
an engine valve return (32) operable to return the engine valve (30) to a closed position;
**characterized in that** the proportional valve (24) has a third position between the first position and the second position at which the proportional valve (24) blocks fluid communication between the hydraulic actuator (28) and the source of fluid under the first pressure (56), and also blocks fluid communication between the hydraulic actuator (28) and the reservoir of fluid under the second pressure (37);
the proportional valve (24) being configured to provide a fluid flow area adapted to couple the source (56) of fluid to the hydraulic actuator (28) wherein said fluid flow area changes nonlinearly with change in valve member position as the valve member (38) moves from the third position to the first position.

2. The apparatus of claim 1, wherein the engine valve return comprises a mechanical return spring (32).

3. The apparatus of claim 1, wherein the engine valve return comprises a hydraulic return.

4. The apparatus of claim 1, wherein the proportional valve is a closed center proportional valve.

5. The apparatus of claim 1, wherein the proportional valve (24) is a 3-way closed center proportional valve.

6. The apparatus of claim 1, wherein the proportional valve (24) is a closed center 4-way proportional valve.

7. The apparatus of claim 1, wherein the electrically controlled valving comprises two two-way valves (20, 22).

8. The apparatus of claim 1 wherein the electrically controlled valving hydraulically controlling the position of the valve member comprises electrically controlled valving for controllably applying a first hydraulic force to move the valve member in one direction, and for controllably removing the first hydraulic force to allow a second hydraulic force that is less than the first hydraulic force to move the valve member in an opposite direction.

9. The apparatus of claim 1 wherein the electrically controlled valving hydraulically controlling the position of the valve member comprises electrically controlled valving for controllably applying a first hydraulic force to move the valve member in one direction, and for controllably removing the first hydraulic force to allow a return spring to move the valve member in an opposite direction.

10. The apparatus of claim 1, wherein the electrically controlled valving comprises two two-way, double solenoid spool valves.

11. The apparatus of claim 1, wherein the electrically controlled valving comprises two two-way, magnetically latchable spool valves.

12. The apparatus of claim 1 wherein the proportional valve(24) is also configured to provide a fluid flow area adapted to couple the reservoir (37) of fluid to the hydraulic actuator (28) wherein said fluid flow area changes nonlinearly with change in valve member position as the valve member (28) moves from the third position to the second position.

13. The apparatus of claim 12 wherein the nonlinear changes in fluid flow area with change in valve position have a decrease in the rate of change of fluid flow area with valve member position as the valve member proceeds toward the third position from both the first and the second positions.

14. The apparatus of claim 1 wherein:
the engine valve return includes a second hydraulic actuator operable to selectively move the engine valve toward an engine valve closed position by the pressure of a fluid acting on the second hydraulic actuator;
the valve member of the proportional valve is also movable to a fourth position at which the proportional valve is adapted to couple the source of fluid to the second hydraulic actuator to move the engine valve toward the engine valve closed position, the proportional valve coupling the reservoir of fluid to the second hydraulic actuator when the valve member is in the first, second or third position;
the electrically controlled valving hydraulically controlling the position of the valve member between the first through fourth positions.

## Patentansprüche

1. Vorrichtung, die ausgelegt ist zum Betätigen eines Motorventils (30), umfassend:
einen hydraulischen Aktuator (28), der betätigbar ist, um über den Druck eines auf den hydraulischen Aktuator (28) wirkenden Fluids wahlweise das Motorventil (30) in Richtung einer offenen Stellung des Motorventils zu bewegen;
ein Proportionalventil (24), das ein Ventilelement (38) hat, das bewegbar ist zwischen einer ersten Stellung, bei welcher das Proportionalventil (24) ausgelegt ist, um eine Fluidquelle unter einem ersten Druck (56) mit dem hydraulischen Aktuator (28) zu koppeln und einer zweiten Stellung, bei welcher das Proportionalventil (24) ausgelegt ist, um den hydraulischen Aktuator (28) mit einem Fluidreservoir unter einem zweiten Druck (37) zu koppeln, wobei der zweite Druck kleiner ist als der erste Druck,
elektrische gesteuerte Ventilausrüstungen (20, 22), die hydraulisch die Stellung des Ventilelements steuern;
eine Rückführung (32) für das Motorventil, die betätigbar ist, um das Motorventil (30) in eine geschlossene Stellung rückzuführen;
**dadurch gekennzeichnet, daß** das Proportionalventil (24) eine dritte Stellung zwischen der ersten Stellung und der zweiten Stellung hat, bei welcher das Proportionalventil (24) eine fluidmäßige Verbindung zwischen dem hydraulischen Aktuator (28) und der Fluidquelle unter dem ersten Druck (56) blockiert, und auch eine fluidmäßige Verbindung zwischen dem hydraulischen Aktuator (28) und dem Fluidreservoir unter dem zweiten Druck (37) blockiert;
das Proportionalventil (24) derart ausgestaltet ist, daß es einen Fluidströmungsquerschnitt vorsieht, der ausgelegt ist, um die Fluidquelle (56) mit dem hydraulischen Aktuator (28) zu koppeln, wobei der Fluidströmungsquerschnitt sich nicht-linear mit Änderung der Stellung des Ventilelements ändert, wenn sich das Ventilelement (38) von der dritten Stellung in die erste Stellung bewegt.

2. Vorrichtung nach Anspruch 1, bei welcher die Rückführung für das Motorventil eine mechanische Rückhohlfeder (32) umfaßt.

3. Vorrichtung nach Anspruch 1, bei welcher die Rückführung für das Motorventil eine hydraulische Rückführung umfaßt.

4. Vorrichtung nach Anspruch 1, bei welcher das Proportionalventil ein zentral geschlossenes Proportionalventil ist.

5. Vorrichtung nach Anspruch 1, bei welcher das Proportionalventil (24) ein zentral geschlossenes Dreiwegproportionalventil ist.

6. Vorrichtung nach Anspruch 1, bei welcher das Proportionalventil (24) ein zentral geschlossenes Vierwegproportionalventil ist.

7. Vorrichtung nach Anspruch 1, bei welcher die elektrisch gesteuerte Ventilausrüstung zwei Zweiwegventile (20, 22) umfaßt.

8. Vorrichtung nach Anspruch 1, bei welcher die elektrisch gesteuerte Ventilausrüstung, welche hydraulisch die Stellung des Ventilelements steuert, eine elektrisch gesteuerte Ventilausrüstung umfaßt, um steuerbar eine erste hydraulische Kraft auszuüben, um das Ventilelement in eine Richtung zu bewegen und um steuerbar die erste hydraulische Kraft aufzuheben, so daß eine zweite hydraulische Kraft, die geringer ist als die erste hydraulische Kraft, das Ventilelement in eine entgegengesetzte Richtung bewegen kann.

9. Vorrichtung nach Anspruch 1, bei welcher die elektrisch gesteuerte Ventilausrüstung, welche hydraulisch die Stellung des Ventilelements steuert, eine elektrisch gesteuerte Ventilausrüstung umfaßt, um steuerbar eine erste hydraulische Kraft auszuüben, um das Ventilelement in eine Richtung zu bewegen und um steuerbar die erste hydraulische Kraft aufzuheben, so daß eine Rückholfeder das Ventilelement in eine entgegengesetzte Richtung bewegen kann.

10. Vorrichtung nach Anspruch 1, bei welcher die elektrisch gesteuerte Ventilausrüstung zwei Zweiwegedoppelsolenoidspulenventile umfaßt.

11. Vorrichtung nach Anspruch 1, bei welcher die elektrisch gesteuerte Ventilausrüstung zwei Zweiwege-, sperrbare Magnetspulenventile umfaßt.

12. Vorrichtung nach Anspruch 1, bei welcher das Proportionalventil (24) auch derart ausgestaltet ist, daß es einen Fluidströmungsquerschnitt vorsieht, der ausgelegt ist, um das Fluidreservoir (37) mit dem hydraulischen Aktuator (28) zu koppeln, wobei der Fluidströmungsquerschnitt sich nicht-linear mit der Änderung der Stellung des Ventilelements ändert, wenn das Ventilelement (28) sich von der dritten Stellung in die zweite Stellung bewegt.

13. Vorrichtung nach Anspruch 12, bei welcher die nicht-linearen Änderungen des Fluidströmungsquerschnitts bei Änderung der Ventilstellung eine Abnahme der zeitlichen Änderung des Fluidströmungsquerschnitts mit der Stellung des Ventilelements aufweisen, wenn das Ventilelement aus sowohl der ersten wie auch der zweiten Stellung in Richtung der dritten Stellung fortschreitet.

14. Vorrichtung nach Anspruch 1, bei welcher:
die Rückführung für das Motorventil einen zweiten hydraulischen Aktuator aufweist, der betätigbar ist, um über den Druck eines auf den zweiten hydraulischen Aktuator wirkenden Fluids wahlweise das Motorventil in Richtung einer geschlossenen Stellung des Motorventils zu bewegen;
das Ventilelement des Proportionalventils auch in eine vierte Stellung bewegbar ist, bei welcher das Proportionalventil ausgelegt ist, um die Fluidquelle mit dem zweiten hydraulischen Aktuator zu koppeln, um das Motorventil in Richtung der geschlossenen Stellung des Motorventils zu bewegen, wobei das Proportionalventil das Fluidreservoir mit dem zweiten hydraulischen Aktuator koppelt, wenn sich das Ventilelement in der ersten, zweiten oder dritten Stellung befindet;
die elektrisch gesteuerte Ventilausrüstung die Stellung des Ventilelements zwischen der ersten bis vierten Stellung hydraulisch steuert.

## Revendications

1. Dispositif adapté pour actionner une soupape de moteur (30), comprenant :
un actionneur hydraulique (28) pouvant être actionné pour déplacer de manière sélective la soupape de moteur (30) vers une position d'ouverture de soupape de moteur par la pression d'un fluide agissant sur l'actionneur hydraulique (28) ;
une vanne proportionnelle (24) comportant un élément de vanne (38) pouvant être déplacé entre une première position, à laquelle la vanne proportionnelle (24) est adaptée pour accoupler une source de fluide à une première pression (56) à l'actionneur hydraulique (28), et une deuxième position, à laquelle la vanne proportionnelle (24) est adaptée pour accoupler l'actionneur hydraulique (28) à un réservoir de fluide à une deuxième pression (37), la deuxième pression étant inférieure à la première pression,
une distribution commandée électriquement (20, 22) commandant hydrauliquement la position de l'élément de vanne ;
un rappel de soupape de moteur (32) pouvant être actionné pour ramener la soupape de moteur (30) à une position fermée ;
**caractérisé en ce que** la vanne proportionnelle (24) a une troisième position, entre la première position et la deuxième position, à laquelle la vanne proportionnelle (24) bloque la communication fluidique entre l'actionneur hydraulique (28) et la source de fluide à la première pression (56), et bloque également la communication fluidique entre l'actionneur hydraulique (28) et le réservoir de fluide à la deuxième pression (37) ;
la vanne proportionnelle (24) étant configurée pour fournir une section de circulation de fluide adaptée pour accoupler la source (56) de fluide à l'actionneur hydraulique (28), dans lequel la section de circulation de fluide varie non linéairement avec la variation de la position de l'élément de vanne alors que l'élément de vanne (38) se déplace de la troisième position à la première position.

2. Dispositif selon la revendication 1, dans lequel le rappel de soupape de moteur comprend un ressort de rappel mécanique (32).

3. Dispositif selon la revendication 1, dans lequel le rappel de soupape de moteur comprend un rappel hydraulique.

4. Dispositif selon la revendication 1, dans lequel la vanne proportionnelle est une vanne proportionnelle dont le centre est fermé.

5. Dispositif selon la revendication 1, dans lequel la vanne proportionnelle (24) est une vanne proportionnelle à trois voies dont le centre est fermé.

6. Dispositif selon la revendication 1, dans lequel la vanne proportionnelle (24) est une vanne proportionnelle à quatre voies dont le centre est fermé.

7. Dispositif selon la revendication 1, dans lequel la distribution commandée électriquement comprend deux vannes à deux voies (20, 22).

8. Dispositif selon la revendication 1, dans lequel la distribution commandée électriquement qui commande hydrauliquement la position de l'élément de vanne comprend une distribution commandée électriquement pour appliquer de manière commandable une première force hydraulique pour déplacer l'élément de vanne dans une direction, et pour retirer de manière commandable la première force hydraulique afin de permettre à une deuxième force hydraulique qui est inférieure à la première force hydraulique de déplacer l'élément de vanne dans une direction opposée.

9. Dispositif selon la revendication 1, dans lequel la distribution commandée électriquement qui commande hydrauliquement la position de l'élément de vanne comprend une distribution commandée électriquement pour appliquer de manière commandable une première force hydraulique pour déplacer l'élément de vanne dans une direction, et pour retirer de manière commandable la première force hydraulique afin de permettre à un ressort de rappel de déplacer l'élément de vanne dans une direction opposée.

10. Dispositif selon la revendication 1, dans lequel la distribution commandée électriquement comprend deux électrovannes doubles à tiroir à deux voies.

11. Dispositif selon la revendication 1, dans lequel la distribution commandée électriquement comprend deux vannes à tiroir à deux voies verrouillables magnétiquement.

12. Dispositif selon la revendication 1, dans lequel la vanne proportionnelle (24) est également configurée pour fournir une section de circulation de fluide adaptée pour accoupler le réservoir (37) de fluide à l'actionneur hydraulique (28), dans lequel ladite section de circulation de fluide varie non linéairement avec la variation de la position de l'élément de vanne alors que l'élément de vanne (28) se déplace de la troisième position à la deuxième position.

13. Dispositif selon la revendication 12, dans lequel les variations non linéaires de la section de circulation de fluide avec la variation de la position de vanne comprennent une diminution du taux de variation de la section de circulation de fluide avec la position de l'élément de vanne alors que l'élément de vanne avance vers la troisième position à partir à la fois des première et deuxième positions.

14. Dispositif selon la revendication 1, dans lequel :
le rappel de soupape de moteur comprend un deuxième actionneur hydraulique pouvant être actionné pour déplacer de manière sélective la soupape de moteur vers une position de fermeture de soupape de moteur par la pression d'un fluide agissant sur le deuxième actionneur hydraulique ;
l'élément de vanne de la vanne proportionnelle peut également être déplacé à une quatrième position à laquelle la vanne proportionnelle est adaptée pour accoupler la source de fluide au deuxième actionneur hydraulique pour déplacer la soupape de moteur vers la position de fermeture de soupape de moteur, la vanne proportionnelle accouplant le réservoir de fluide au deuxième actionneur hydraulique lorsque l'élément de vanne est dans la première, la deuxième ou la troisième position ;
la distribution commandée électriquement commandant hydrauliquement la position de l'élément de vanne entre les première à quatrième positions.
